Europäisches Patentamt

European Patent Office

Office européen des brevets

(11) Publication number: **0 100 916**
**B1**

(12) EUROPEAN PATENT SPECIFICATION

(45) Date of publication of patent specification: **12.10.88**

(51) Int. Cl.⁴: **H 04 N 7/133**

(21) Application number: **83106970.3**

(22) Date of filing: **15.07.83**

(54) **Method and device for coding an image signal with redundancy reduction with locally uniform distortion.**

(30) Priority: **19.07.82 IT 6791882**

(43) Date of publication of application:
**22.02.84 Bulletin 84/08**

(45) Publication of the grant of the patent:
**12.10.88 Bulletin 88/41**

(84) Designated Contracting States:
**DE FR GB NL SE**

(56) References cited:

**IEEE INTERNATIONAL CONFERENCE ON ACOUSTICS,SPEECH AND SIGNAL PROCESSING, vol 1 of 3, 3rd-5th May 1982, pages 467-470, Paris, FR; M.GUGLIELMO et al.: "Subjective quality evaluation of different intraframe adaptive coding schemes, based on orthogonal transformations"**

**IEE PROCEEDINGS-F,SECTION AAI, vol. 129, no. 1, part F, February 1982, pages 28-40, Old Woking, GB; K.N.NGAN et al.: "Adaptive transform coding of video signals"**

(73) Proprietor: **CSELT Centro Studi e Laboratori Telecomunicazioni S.p.A.**
**Via Guglielmo Reiss Romoli, 274**
**I-10148 Turin (IT)**

(72) Inventor: **Chiariglione, Leonardi**
**V.S. Ambrogio, 4**
**Villar Dora (TO) (IT)**
Inventor: **Guglielmo, Mario**
**C.so Meinardi, 24**
**Montalenghe (TO) (IT)**

(74) Representative: **Riederer Freiherr von Paar zu Schönau, Anton et al**
**Van der Werth, Lederer & Riederer Freyung 615**
**Postfach 2664**
**D-8300 Landshut (DE)**

## Description

The present invention concerns signal coding systems. More particularly it related to a method and a device for coding an image signal with redundancy reduction with locally uniform distortion.

The most efficient method of image coding in digital form effect a subdivision into blocks of PCM signal samples produced in sequence by the source. An image signal is typically non-stationary as its statistic characteristics vary locally. To have an efficient coding of said signal both from the observer's subjective stand point and from the objective standpoint (i.e. signal-to-noise ratio), the amount of information necessary to the representation of each block ought to be varied possibly also be effecting a block-by-block adjustment of coding parameters. In this way the minimum amount of information is used for each block, and the redundancy implicit in PCM representation with constant sampling period is reduced.

A known coding technique, to be applied to non-stationary portions of the image signal, consists of subdividing the whole image into blocks, applying a linear transformation of each block to obtain a set of coefficients, and coding each set of coefficients independently of the others. This technique is described for example in the article by H.C. Andrews, J. Kane, W. K. Pratt "Hadamard transform image coding" Proceedings IEEE, January 1969, pp 58—68, or in the article by A. Habibi, P. A. Wintz "Image coding by linear transformation and block quantization", IEEE Transactions on Communication Technology, vol. COM-19, February 1971, pp. 50—63.

According to this known technique the problem of assigning a different number of bits for the representation of each block is generally solved by calculating a parameter depending on the block "activity" and choosing, depending on the obtained parameter value, a particular bit assigning table for each block, as described by I. J. Gimlett, "Use of activity classes in adaptive transform image coding", IEEE Transactions on Communication, vol. COM-23, July 1975, pages 785—786; by W. H. Chen, C. H. Smith, "Adaptive coding of monochrome and color images", ibid, vol. COM-25, November 1977, pages 1285—1292; and by O. R. Mitchell, A. Tabatabi "Adaptive transform image coding for human analysis", ICC 1979, Boston, pages 23.2.1—23.2.5.

This method is not very efficient because:

a) a parameter depending on the "activity" cannot be found which correctly represents the block reconstruction error (distortion or reconstruction error are the terms to be used to indicate a suitable measurement of the difference between the digital signal produced by the source and the same signal reconstructed after the coding operation);

b) the number of available bit assignment tables is generally limited, (not greater than 4), then the subdivision of the information to each block is not optimal);

c) from the two preceding limitations the impossibility derives of assuring a constant error in the block representation;

d) would one choose a particular bit assignment table giving the least reconstruction error, it would first be necessary to effect the coding according to all the available tables.

A method is known of constant distortion image signal coding (V. R. Algazi, S. J. Sakrison, "Encoding of a counting rate source with orthogonal functions", paper presented at the symposium on Computer Processing in Communications, held at the Polytechnic Institute of Brooklyn, April 1969).

Still, according to this method, the quantization is intrinsically non-adaptive, and the problem of bit assignment to the coefficients is solved by using a Huffman encoder, after making a uniform quantization.

Also adaptive transform coding methods of video signals are known, such methods being described in IEE proceedings-F, Section AA1, Vol. 129, No. 1, Part F, February 1982, pages 28 to 40, Old Woking, GB, K. N. Ngan et al; "Adaptive transform coding of video signals". Therein, in chapter 2.2.2, a method is described wherein the signal is subdivided into blocks to be coded in sequence, wherein at first a two-dimensional linear transformation is applied to each of said blocks thus obtaining a set of transformed coefficients, and then the coding is iteratively performed by coding at each iteration one of the coefficients of the block with an additional bit with respect to the preceding iteration, the iterations relating to each block starting with the counting of all of its coefficients by zero bits. The choice of the coefficient the coded signal of which is to be supplemented by the additional bit is carried out by determining the quantization distortions of each of the coefficients and assigning the additional bit to the coefficient with the largest quantization distortion. The iteration is stopped when the total number of bits in a block has been assigned. This procedure, however, implies that for coding, besides the coefficient value, also the information about the number of bits by which the coefficient is coded is to be supplied every time to the decoder which requirement makes the system rather inefficient.

Starting out from such prior art, which provides said signal being subdivided into blocks to be coded in sequence, a two-dimensional linear transformation being previously applied to each of said blocks thus obtaining a set of transformed coefficients, wherein said coding is iteratively performed by coding at each iteration one of the coefficients of the block with an additional bit with respect to the preceding iteration, the choice of the coefficient depending on the determination of the coding errors of the coefficients and the iterations relating to a block starting with the coding of all its coefficients with zero bits, the described problems are solved by the method of the present invention, which method is characterized in that at each iteration the choice of the coefficient to be coded with the additional bit is carried out by using one out of K tables in each of which, depending on the total bit number already assigned to the block the index of said coefficient is written, and in that at each iteration a global error value is evaluated which global error is that made when reconstructing the block itself by using the total bit number already assigned to the block until that moment, the iterations relating to that block ending when said global error is lower than a predetermined threshold error value. Such method is a method with redundancy reduction with locally uniform distortion which, on the basis of the direct computation for each block of the reconstruction error, assigns for a block representation the specific bit number which renders the error made equal to the desired error, besides it does not require the coding according to each of the possible bit assignment tables (one per each number of bits used), but it uses an iterative method which constructs the assignment table with a number of coding steps, each of them involving an only coefficient, equal to the number of bits used for the representation of the block. The assignment tables were previously determined and are known both by the coder and the decoder, thus it will be sufficient to supply the decoder with the number of bits used for the block and the identity of the particular table.

A further object of the present invention is a device designed to implement said method.

Now, the method object of the present invention will be described.

First, a linear transformation is applied to the image signal, which has already been sampled according to the PCM (Pulse Code Modulation) technique and subdivided into successive portions or blocks, thus obtaining a set of new random variables or transformation coefficients from each block. Each set of coefficients is then coded independently of the others by assigning a variable number of bits. The coding is carried out iteratively by assigning at each iteration a bit to one of the coefficients of the block and directly evaluating at each iteration the global error made in the representation of the block with the present total number of bits. The iteration starts with the representation of all the coefficients of a block with zero bits and goes on till when the error becomes lower than a pre-determined threshold value. At each iteration the coding procedure provides the following steps:

—the coefficient to be coded with an additional bit is first quantized by using a determined quantization law characterized by a determined number of levels having determined extreme points;

—the index of level within which the coefficient value is comprised is the coded value of the coefficient itself;

—the difference is calculated between the contributions to the global error relating to the coefficient codings before and after the additional bit assignment; generally that difference has a value less than or equal to zero; each contribution to the global error is computed on the basis of the difference between the coefficient value and the respective quantized value;

—the difference value between the contributions to the total error is added to the error value obtained at the preceding iteration, till when the global error becomes lower than the pre-determined threshold. It is worth noticing that the global error value, at the start instant of the iterations relating to a block, is the addition of the values of the transformation coefficients of the block, as the coding starts with the assignment of zero bits to all the coefficients.

The index of the coefficient to which at each iteration an additional bit is given, is furnished a priori by a determined number K of tables, one per each value assumed by a parameter k depending on the energy distribution inside a block.

These tables have been experimentally determined a priori taking into account, in the subdivision into K classes of the image blocks, of the presence in the originary block of an image structure chiefly horizontal or vertical, or of more or less thin frame of details.

The parameter k is computer as follows: first, each block is subdivided into K physical regions; then, the barycenter of the block, considered as a set consisting of various coefficients, is calculated. Said coefficients may be weighted by a function allotting a greater weight to the coefficient's relating to higher frequencies; the value of k is chosen (where $1 \leqslant k \leqslant K$) which corresponds to the region within which the calculated barycenter falls.

Each block will be indicated by a particular value of k which will determine the choice of the particular table above. Whenever an additional bit is allotted to one of the coefficients, the total number of bits assigned to the block is the address for the chosen table.

The coefficients of a block are further subdivided into groups, depending on the mean information amount contained in each of them. The maximum number of bits with which the coefficients can be coded during iterations varies according to the group they belong to.

In correspondence with each number of bits which can represent the coefficients of a group, a determined quantization law exists, able to quantize the coefficients of the group. All the quantization laws relating to a group of coefficients form a family. All the families of quantization laws form a set.

The number of sets used is $K \times S$, where K is the above defined number of classes, and S the maximum value which may be assumed by the parameter s depending on the mean energy amount, that is the contrast of the block. The mean, absolute value of the coefficients of a block may vary, depending on the mean energy amount: the, the parameter s allows a better adjustment of the quantization procedure depending on the mean absolute value of the coefficients. Once k has been determined, all the S quantization operations relating to parameter s are carried out in parallel, and simultaneously, choosing then the one which produces the least global error.

At the end of the operations relating to an image block, a coding of the block will be obtained with a determined total number of bits suitably subdivided among the various coefficients (the coded value of each coefficient is as mentioned the index of the level of the quantization law chosen within which the transformed value of the coefficient itself is comprised). Said subdivision is used for a possible transmission operation of coded image blocks.

The device object of the present invention will be described now with reference to the annexed drawings in which:

—Fig. 1 shows the general block diagram of the device for coding the image signal, object of the present invention;

—Fig. 2 shows the circuit diagram of the block of Fig. 1 denoted by acronym QCN;

—Fig. 3 shows the circuit diagram of the block of Fig. 2, indicated by acronym QAE.

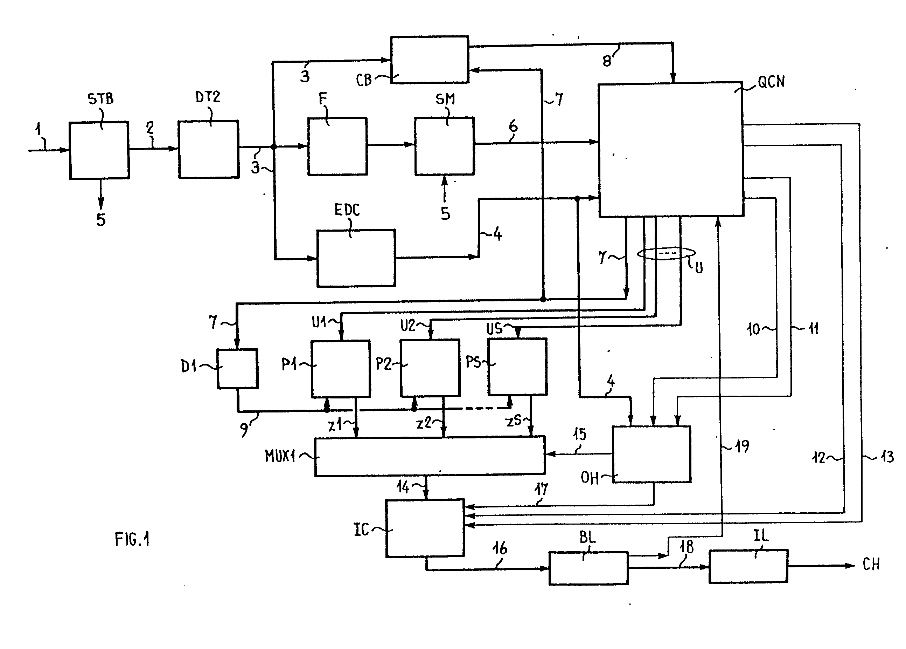

In Fig. 1 STB denotes a usual converter which receives at the input on connection 1, under serial form, the PCM-coded samples of the video signal. Thus each frame of the TV signal forms a matrix of NP points×NR lines, each matrix is subdivided into blocks of dimensions n×m, with n, m respectively submultiples of NP and NR.

Each group of m lines forms a stripe. Blocks belonging to a stripe are orderly supplied at the output of connection 2, so making a horizontal block scanning of the image, and each block will be processed independently of the others, by circuits downstream STB.

Furthermore STB provides in a known way at the output on wire 5, at the beginning of each image block, a reset signal for block SM which will be mentioned hereinafter. Connection 2 is connected to block DT2 which performs a two-dimensional transformation of samples of each block. The transform bases used in the two directions, that is along the lines and along the points, can be different and whatever; the operations carried out by the circuits down-stream DT2, as well as their configuration, are independent of the type of transform chosen. Finally, DT2 obtains for each block n×m coefficients Cij (with $1 \leqslant i \leqslant n$; $i \leqslant j \leqslant m$), each of them represented by the NB bits, which it serially supplies at the output on connection 3.

Connection 3 is connected to block EDC which calculates the barycenter of the absolute values of the coefficients, by using indices i, j as coordinates which identify the position of the coefficients in a rectangular region in which a block is assumed as being projected. This region has been experimentally subdivided into K areas with suitable boundaries. Each block is classified as belonging to one of the corresponding K classes, depending on the area in which the computed barycenter falls. The number k characteristic of each block is supplied at the output on connection 4 toward blocks QCN and OH.

The connection 3 is also connected to block F which calculates the value of a function apt to represent the error which is committed by quantizing each coefficient with the value zero, i.e. by assuming that the difference between quantized value and actual value of the coefficient is equal to the actual value itself F receives on connection 3. The function calculated by F is the square of the value supplied at its input, which may be weighted according to the visibility curve versus the frequency. The output of F is furnished to block SM consisting of a usual accumulator register, reset to zero at the beginning of each new block by means of a reset signal it receives from wire 5.

In said register there are added up all the error values calculated for the coefficients of a block, thus obtaining the global error of the block representation, when all its coefficients are represented by zero bits and null mean value. This global error value is supplied at the end of the addition operation at the output on connection 6 to block QCN.

The various coefficients present on connection 3 are also furnished to block CB, consisting of an ordinary random access buffer memory, into which they are written in sequence and read by an addressing supplied by circuit QCN on connection 7; the read value is then delivered on connection 8 to block QCN itself.

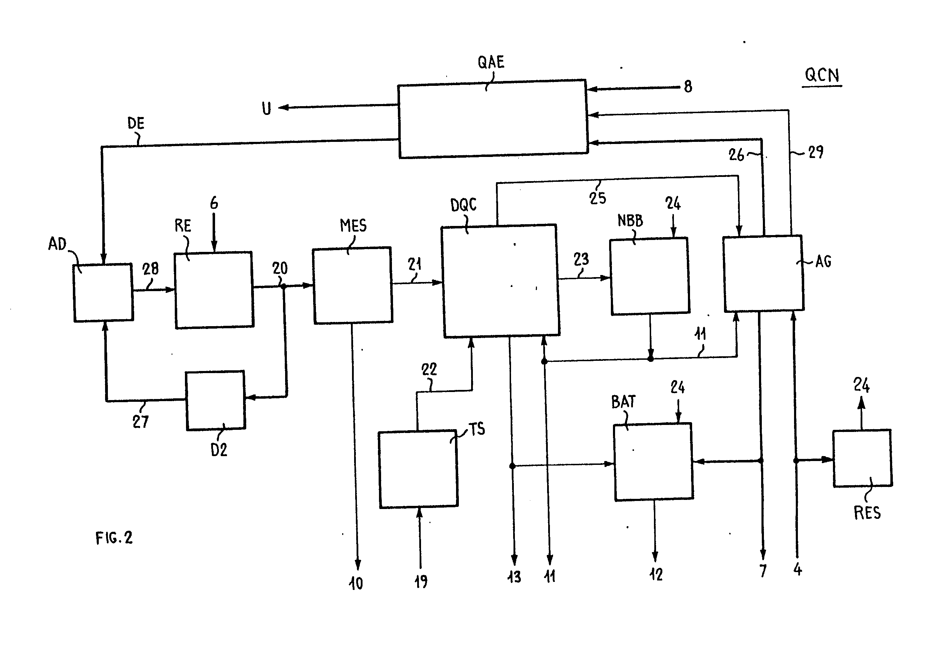

Block QCN which will be explained in detail in connection with Fig. 2, codes the coefficients assigning a bit at a time to the various coefficients of the block, till when it verifies that the global representation error of the block is lower than a predetermined threshold. QCN executes a quantization operation on the coefficients, using S sets of quantization laws, which will be later referred to as quantizers, to have the best correspondence between the dynamics of the coefficients belonging to a block and the field of values that one of the sets covers.

At each iteration, i.e. at each bit assigned to the block, a single coefficient is involved in the quantization operation: index L of such a coefficient, in the block linearized by columns ($L = j \cdot n + i$) is supplied by the same block QCN on connection 7 and forms the reading address of the buffer CB which supplies, on connection 8, QCN with the values of non-quantized coefficient.

Each of the outputs of QCN on bus U, i.e. on the various connections U1, U2 ... US, supplies the coded value of the coefficient, represented by a constant bit number MB, obtained by the use of one of the quantizers of the corresponding set. The outputs U1 ... US are connected to buffers P1, P2 ... PS able to store the coded coefficients, updating the preceding value, at the addresses supplied on connection 9 by block D1. D1 delays by a suitable time the addresses present at its input on connection 7. QCN supplies the other outputs with the following information: on connection 10, at each iteration, which set s (where
1≤s≤S) of quantizers produces the minimum
error; on connection 11, at each iteration, the
number of bits actually used for block coding; on
connection 12, at the end of the iterations relating
to a block, the table indicating the subdivision,
among the various coefficients of each block, of
the number of of bits actually used for coding the
block itself; on wire 13 the enable to transmission
of the total information relating to a block at the
iteration end.

Connections 4, 10, 11 are connected to the
corresponding three sections of a register OH,
which at the end of the iterations relating to a
block, will contain the additional information
which is to be transmitted for each block, so that
the receiver may be able to correctly decode
information relating to the coefficients.

Block MUX1 is an ordinary multiplexer which
receives at its inputs, on connections z1, . . . zS,
the contents of buffers P1 . . . PS respectively, i.e.
the coded coefficients relating to a block, and
connects one of said inputs with connection 14 at
the output, on the basis of the command present
on connection 15: this command consists of the
information coming from connection 10 and
stored in the corresponding section of register
OH.

Connection 14 is linked to an input of the
enabling circuit IC; when IC receives on wire 13
the enabling to transmission, it sends onto the
output connection 16, first of all the contents of
the register OH, delivered to it at one of its inputs
on connection 17; then it sends the information
coming from connection 14. On connection 14 the
coefficients, each coded by MB bits, arrive in
sequence. Depending on the information contemporaneously present on connection 12, IC
extracts, for each coefficient before transmission,
from the MB bits, the only useful information, i.e.
only the significant bits used to represent each
coefficient, and sends only said useful information on connection 16.

The information arriving from connection 12 is
not transmitted, as the decoding circuit of the
receiver is able to reconstruct the table of the bit
subdivision among the coefficients of a block
starting from the only information on the actual
total number of bits assigned to the block; which
information is delivered by QCN on wire 11. In
addition IC can possibly add the suitable bits of
information protection against transmission
errors. Connection 16 is then connected to line
buffer BL which is to adapt the non-uniform speed
at which data are produced (non constant number
of bits for coding a block) and supplied at its input
on connection 16, to the constant speed at which
data are then to be delivered to line CH through
the connection 18 and the usual line interface IL.

Block BL also supplies at the output 19 the
information relating to its stuffing degree; said
information is supplied to block QCN which uses
it to modify the error threshold when the amount of data becomes incompatible with transmission
speed and with the size of the line buffer used, as
it will be better disclosed in connection with Fig.
2. Fig. 2 shows the circuit diagram of block QCN of
Fig. 1.

Reference RES denotes an ordinary reset signal
generator for blocks NBB and BAT which delivers
a pulse at the output on wire 24, when the
information is present on the input connection 4.

Reference RE denotes an ordinary register consisting of S separate sections: in each section, at
the beginning of the operations relating to a
block, the information present on connection 6 is
stored, i.e. the global reconstruction error of a
block, when all the coefficients are represented
with zero bits. Said information is present only
when block SM (Fig. 1) has completed the addition operation. Each section s of RE supplies then
the stored information on the corresponding outputs being part of bus 20. Bus 20 is connected to
block MES, which selects the minimum value
among those coming from the various sections of
RE and delivers it at the output on connection 21.
The index which identifies the selected section s
of RE (corresponding to the index of the set of
quantizers giving minimum error value) is supplied on connection 10 to the register OH of Fig. 1.

Connection 21 is applied to block DQC which
consists of three comparators checking whether
the conditions necessary to the transmission of a
block are reached. The enabling to transmission is
supplied on wire 13 to block IC of Fig. 1, when one
of the following two conditions takes place;

a) The first comparator has found that the error
present on the connection 21 is lower than or
equal to the pre-determined one delivered on
connection 22 by circuit TS, and the second
comparator has found that the number of bits
used for coding the block, delivered to DQC on
connection 11, is greater than or equal to a pre-
determined minimum value, stored in a suitable
memory present in DQC.

b) The third comparator has found that the
number of bits used for coding the block is equal
to a maximum pre-determined value NBmax,
stored in DQC itself.

Circuit TS, depending on the information on the
stuffing degree of buffer BL (Fig. 1), which it
receives on connection 19, selects for each image
block a suitable threshold value of the admitted
error representation of the block and delivers it on
connection 22 to block DQC.

The control of the amount of information produced per each block may depend on an absolute
and/or differential measurement of the buffer
state, i.e. on a measurement depending on the
variation of the stuffing degree due to the presence of the data of the last coded blocks. By a
suitable choice of the threshold error value, TS
can vary the data amount, produced per each
block, from zero to NBmax bits.

If none of the above conditions a), b) has been
verified, DCQ emits a pulse on wire 23 towards
block NBB consisting of a counter which increments by "1" at each pulse; this counter is reset to zero at the beginning of QCN operations relating to a block, by the signal on wire 24. NBB delivers at each iteration the reached result at the output on connection 11 connected to blocks DQC, AC and OH (Fig. 1). In addition if conditions a) or b) have not been verified, DQC emits an enable signal for block AG on wire 25.

Block AG comprises a memory containing K terns of tables, where K is the number already defined of different energy distributions among the coefficients of a block. Each tern of tables is so made up:

—a first table consists of NBmax positions where, in correspondence with the progressive index h, indicating the present bit number, by which the block is represented, that is the value present at each iteration on connection 11, the index L is stored of the coefficient to which the h-th bit is given. In the construction of this table it is understood that the attribution of the h-th bit to the block modifies only the number of bits representing a determined coefficient, while the number of bits representing all the other coefficients remains unchanged;

—a second table also consisting of NBmax positions, in which in the h-th position, directly corresponding to the h-th position of the first table, the number of bits is stored by which the coefficient of index L is represented;

—a third table, consisting of n×m positions, where, in the L-th position, the number of bits is present assigned to the L-th coefficient when NBmax bits have been assigned to the block.

For each considered block, the respective number k, supplied on connection 4, selects the tern of tables to be chosen. Then, when the enabling over wire 25 is present, AG uses that number k and the information read in the second table at position h, and in the third table at position L (with L given by the contents of the first table at position h) to calculate the address and the number of levels of quantizers to be used for the coding of the L-th coefficient both with the new and old bit assignment.

The two data pairs are delivered at the output of AG in sequence on connection 26. Moreover, upon emission of the second pair of values on connection 26, AG emits on wire 29 an enable signal for outpus U, DE of block QAE.

On connection 7, AG supplies the value L to blocks D1, CB (Fig. 1) and BAT (Fig. 2). Block BAT comprises a memory of n×m positions. At each iteration said memory stores the present subdivision, among the various coefficients of a block, of the total bit number assigned to the block itself up to that moment.

BAT also comprises an adder which increments by 1 the value stored in the L-th memory position, corresponding to the L-th coefficient, addressed by the bit configuration on connection 7, when present. Upon reception of the enable signal on wire 13, BAT emits at the output on connection 12, the values stored in each position of its memory, with the same order by which coded efficients are transmitted on channel CH (Fig. 1).

The contents of memory BAT is reset to zero, when the signal is present on wire 24.

Wire 29 and connections 26 and 8 are connected to block QAE. QAE quantizes the L-th coefficient, arriving from connection 8, by using the S sets of quantizers already-defined, in the two cases in which the coefficient itself is coded with the new and old bit assignment. The S coded values of the quantized coefficient are sent on bus U.

Bus DE consists of S connections on which the value is supplied, which is generally negative, of the difference between a function of the error made in representing the coefficient before and after the updating of the number of bits On the s-th connection the value is present corresponding to the coding of the block with the s-th set of quantizers.

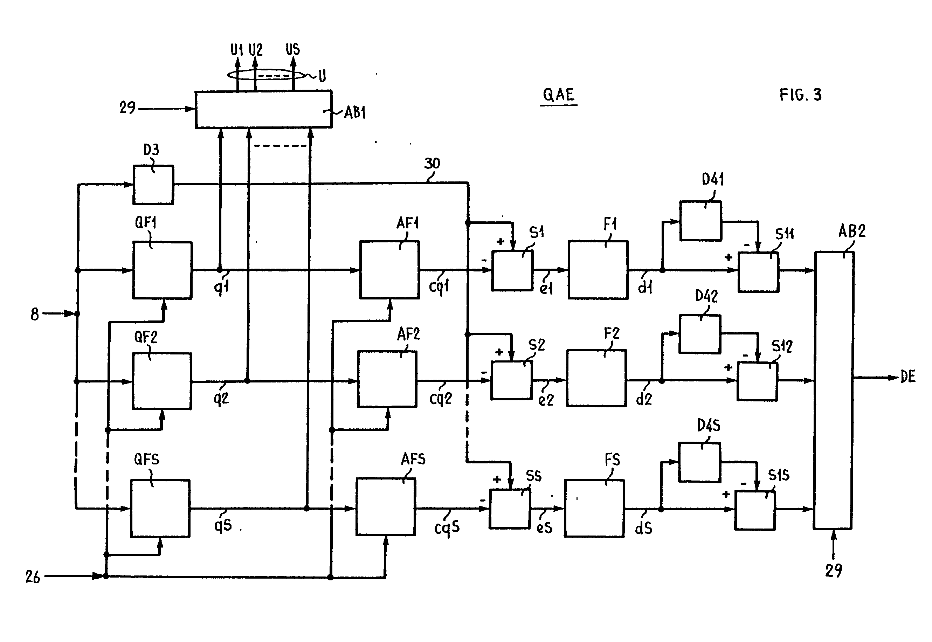

The building up and the operation of block QAE will be disclosed in connection with Fig. 3. The S connections belonging to bus DE are connected to an equal number of adders comprised in block AD; each adder algebraically sums the value of error difference, present on the corresponding connection of DE, with the error value loaded in the corresponding section of RE, sent to AD via bus 27 through delay circuit D2 and bus 20. The S results at the output of AD on bus 28 form the new S error values, each concerning the corresponding set of quantizers, made in representing the image block, when the latter is represented by the total bit number stored in block NBB.

Then the operations already described will be repeated till when DQC has verified one of the conditions necessary for a block transmission.

In Fig. 3 references QF1, QF2 . . . QFS denote S quantization circuits. Each circuit comprises memories in which K tables are written containing the values of the end points of quantizers used to quantize each coefficient; therefore each block QF comprises K sets of quantizers, where K is the above-defined number.

For each block QF, the address on connection 26 identifies a determined quantizer of a determined family characterized by a determined number of levels; said number of levels being the same supplied as second information on connection 26.

Moreover each block QF comprises a comparing circuit which compares at each iteration the coefficient present at the input on connection 8 with the values loaded in the memory, starting from the address supplied on connection 26, and for a maximum number of times indicated by the number of levels of the quantizer, which is present, as mentioned, on connection 26.

Each QF separately and at the same time as the others carries out the same quantization operation (using its own families of quantizers) on the coefficient delivered at the input and supplies at the output the quantization interval index comprising the coefficient value. This index is represented by a constant bit number MB and represents the coded-coefficient value.

The outputs of blocks QF1 . . . QFS, respectively q1 ... qS, each of MB wires, are respectively applied to the first input of blocks AF1 ... AFS, connection 26 being connected to the second input of said blocks.

Blocks AF consist of memories containing the values representing each of the quantization intervals, having a position in said memories in one-to-one correspondence with that of the end points of the quantization intervals contained in blocks QF1 ... QFS.

The values of the coded coefficient present on the respective connection q and of the address present on connection 26 are added together in each AF, thus obtaining the address for the memories inside AF; the contents of the memory cell so addressed is supplied to the respective output cq.

In the particular case described here, the various quantized coefficients at the output of the blocks AF are represented by NB bits; then the connections cq1 ... cqS are composed each by NB wires.

Connections cq1 ... cqS are connected to the respective first input of adders S1 ... SS which are all equal. The value of non-quantized coefficient present on connection 30 outgoing from block D3 is supplied to the second input of all the adders. D3 delays the information it receives at its input, through connection 8, by a time equal to that necessary to the circuits QF and AF to effect the quantization.

Adders S1 ... SS execute the difference between the data received at their inputs, and supply the respective result, i.e. the difference between the values of the coefficient and the quantized coefficient, at the output on respective connections e1 ... eS, which are connected to blocks F1 ... FS, (equal to each other and of the same kind as block F of Fig. 1), which calculate the value of the error function due to each coefficient and deliver it at the output respectively on connections d1, d2, ... dS. These connections are respectively connected to delay circuits D41, D42, ... D4S and to adders S11, S12 ... S1S. The delay introduced by D41 ... D4S is equal to the recurrence period of the addresses on connection 26.

The second input of adders S11 ... S1S consists respectively of the outputs of D41 ... D4S.

The outputs of S11 ... S1S are applied to the enabling circuit AB2 which receives the enabling signal on wire 29. When the first pair of address and number of levels is present on connection 26, i.e. when on wire 29 the enabling signal is not present, the data present on outputs d1, d2, ... dS are only written into blocks D41 ... D4S.

When, on the contrary, the second pair of values is present on connection 26, and the enabling signal is present on wire 29, the data on outputs of S11 ... S1S are delivered on the respective connections of bus DE; in this case said outputs represent the S differences of representation errors of the L-th coefficient quantized by NB(L)−1 bits taken with negative sign and afterwards NB(L) bits taken with positive sign.

Connections q1 ... qS are also connected to the inputs of the enabling circuit AB1, which connects them to the respective connections of bus U, when the enabling signal on wire 29 is present. The way of working of the device provided by the invention will be briefly described hereinafter.

The image signal, present on connection 1 (Fig. 1), is subdivided into blocks by circuit STB and is then supplied to DT2 which performs the two-dimensional transformation of the samples of the various blocks, and supplies on connection 3 in sequence the transformed coefficients of each block.

The coefficients of each block are then supplied to block CB which memorizes them, to block EDC which computes the value k characteristic of the respective image block and supplies k to block QCN, and to block F which calculates the square of the value of each coefficient. The output of F is applied to block SM which sums up the squares of the coefficients of a block, thus obtaining the error value made if all the coefficients of the block are quantized with the null value: this error value is obviously the maximum error which can be made in the quantizing operation of a block and is taken as a starting value for the operations which are to be carried out by block QCN.

QCN operates iteratively. At the first iteration relating to a block, it receives from SM on connection 6 the error value calculated by SM itself and stores in the S sections of register RE (Fig. 2), whose outputs on connection 20 are supplied to blocks MES and D2. At each iteration MES supplies at the output towards DQC the minimum of the S error values it receives from MES. Clearly at the first iteration its presence is not important, as the S values at its inputs are equal. MES in addition supplies at each iteration on wire 10 to OH (Fig. 1) the value of the index S relating to the selected minimum error value.

DQC is to decide whether to go or not with the iterations relating to a block, as already mentioned in connection with the description of Fig. 2; if it decides to go on, it supplies a pulse to block NBB through wire 23, and an enable signal to block AG through wire 25, if on the contrary, it decides to interrupt the iterations, it supplies an enable signal on wire 13 towards BAT (it happens if the error value on wire 21 becomes equal to or less than that supplied by TS on wire 22, of if the total number of bits of coding given to the block exceeds the maximum value NBmax).

At each iteration NBB supplies on wire 11 the present total value of bits given to the block, said value incrementing by a unit at each pulse on wire 23. This total value is also delivered to DQC and AG. AG, on the basis of said total value and of k value it receives on connection 4 from EDC (Fig. 1), when enabled by the signal on wire 25, determines which of the coefficients of the block has to be coded with an additional bit.

On this purpose, AG supplies on connection 7 to BAT and CB (Fig. 1) the address of that coefficient. In CB this address serves to QAE through connection 8 the value of the coefficient; in BAT on the contrary this address serves to write in the internal table the new total value of coding bits given to this coefficient. Hence BAT at each iteration contains the table of the subdivision among the various coefficients of the total number of bits given to the block, said table being supplied to the output on connection 12 when it receives from DQC the enabling on wire 13. At the emission of the coefficient address on connection 7, AG emits on connection 26 in sequence the two pairs of addresses and of numbers of levels of block QAE, which has already been mentioned in connection with Fig. 2.

Consequently, QAE, whose way of working has already been described in connection with Fig. 3, emits on the connection of the bus U the S coded values of the coefficient present on connection 8; said coded values are then stored in the memories P1 . . . PS (Fig. 1), in the positions identified by the address present on connection 7.

Moreover QAE emits on the bus DE the S values of error difference, already defined, between the representation of the coefficient (present on connection 8) with the present and preceding bit assignment; said S values (generally negative as the error made by using the preceding assignment is generally greater than that made by the present one) are then added in AD (Fig. 2) to the S error values (made at the preceding iteration) present at the output of RE: the S results are then re-written in RE and then a new iteration starts.

When the error supplied by MES becomes lower than the threshold level chosen, DQC interrupts the iterations relating to the block and emits the signal on wire 13 which is also delivered to IC (Fig. 1). At this point IC supplies BL first of all with the information stored in OH, and then with the contents of the memory P which has been selected by the signal on wire 15 coming from OH; said signal having been delivered to OH by block MES of Fig. 2) (i.e. memory P is selected which contains the coded coefficient values allowing the minimum error).

Then the total information present on connection 16 is ready to be transmitted by blocks BL and IL as already mentioned.

## Claims

1. A method of image signal coding, said signal being subdivided into blocks to be coded in sequence, a two-dimensional linear transformation being previously applied to each of said blocks thus obtaining a set of transformed coefficients Cij, wherein the coding is iteratively performed by coding at each iteration one of the coefficients of the block with an additional bit with respect to the preceding iteration, the choice of the coefficient depending on the determination of the coding errors of the coefficients and the iterations relating to each block starting with the coding of all its coefficients by zero bits, characterized in that at each iteration the choice of the coefficient to be coded with the additional bit is carried out by using one out of K tables in each of which, depending on the total bit number already assigned to the block, the index of said coefficient is written, and in that at each iteration a global error value is evaluated which global error is that made when reconstructing the block itself by using the total bit number already assigned to the block until that moment, the iterations relating to that block ending when said global error is lower than a predetermined threshold error value.

2. Method according to claim 1, characterized in that said K tables have been determined on the basis of K possible energy distributions associated with the block image; in that a subdivision of the blocks into K physical regions is carried out, making a one-to-one correspondance between said K tables and said regions; in that the position of the barycenter is calcualted for each block, said barycenter being computed as a mean of the sum of the values of all the transformed coefficients, said barycenter position being determined by using as coordinates indexes j, i of said coefficients; and characterized also in that each block is labeled by a number k ($1 \leqslant k \leqslant K$) identifying the region in which said barycenter falls, said number k determining for each block the choice of one of said K tables.

3. Method according to claim 2, characterized in that the transformed coefficients of a block are subdivided into groups in function of the mean information quantity carried by each of them, all the coefficients of a group being coded by the same maximum bit number; in that for each of said groups a family of quantization laws of said coefficients is provided, a determined quantization law of a family being in correspondence with the number of bits of the coded coefficient of the group; further characterized in that, at each iteration, said coefficient which is to be coded with an additional bit is quantized, the value of the coded coefficient being the quantization level index of said coefficient when coded with an additional bit said quantization supplying also a first and second quantized value, respectively relating to the preceding and present number of bits by which said coefficient is coded.

4. Method according to any of claims 1 to 3, characterized in that, at each iteration, said global error is computed as follows:
—a first and a second difference between the value of said transformed coefficient and respectively said first and second quantized values are computed;
—an error function is computed for each of said differences and the function value relevant to said first difference is subtracted from that relevant to said second difference, thus obtaining a partial error value;
—said partial error value is then added to an initial error value already updated with the partial errors computed at the preceding iterations, thus obtaining said global error, said initial error being given by the sum of the values of said error function calculated for each coefficient when each coefficient is coded with zero bits.

5. Method according to claim 3 or to claim 4 referred to claim 3, characterized in that, for each of said groups, K S families of quantization laws are provided, where K is said number of physical regions into which the blocks are subdivided and S is a determined number of levels into which the range of values of the mean energy quantity of the block is subdivided; and in that at each iteration, depending on said number k, there are chosen and carried out in parallel a number S of said quantizations of said coefficient which is to be coded with an additional bit, one per each of said levels of mean energy quantity, obtaining S values of coded coefficient and S first and second quantized values; further characterized in that at each iteration a number S of said global error computations are carried out in parallel, each computation relating to one of the S pairs of said first and second quantized values, choosing afterwards the minimum of said S values of global error and choosing in addition the corresponding value of coded coefficient.

6. Method according to claim 4 or claim 5 referred to claim 4, characterized in that said error function is the square of said differences.

7. Device for coding the image signal, said signal being subdivided into blocks to be coded in sequence, a two-dimensional linear transformation being previously applied to each of said blocks, thus obtaining a set of transformed coefficients Cij, characterized in that it comprises:

—a circuit (EDC) computing the barycenter of the absolute values of the coefficients of each block, which receives at the input said transformed coefficients and, using indexes i, j of said coefficients as coordinates, computes the position of the barycenter of the absolute values of the coefficients, delivering at the output a number k (where $1 \leqslant k \leqslant K$) identifying one of the K regions into which each block is subdivided and where the coordinates of said barycenter fall;

—a circuit (F) which calculates and delivers at the output the value of a function of an initial partial error relating to each of the transformed coefficients it receives at the input;

—a first loading register (SM), reset to zero at the beginning of each block, which delivers at the output the sum of said values of initial partial error received from said circuit (F), relating to all the coefficients of a block, said sum being a value of initial global error;

—a first memory (CB) apt to temporarily memorize all the transformed coefficients relating to a block and deliver them at the output, on the basis of an address value delivered at one of its inputs;

—a coding circuit (QCN), which carries out iteratively the coding of the transformed coefficients of a block, and which at each iteration; addresses said first memory (CB) to receive at the input one of said coefficients; assigns an additional coding bit to said coefficient starting, at the first iteration of a block, from a coding of all the coefficients with zero bits; depending on a total number of coding bits till that moment given to the block, and depending on said number k it receives from said circuit computing the barycenter (EDC), chooses S quantization laws to obtain S quantized values of said coefficient; delivers at the output S corresponding coded values of said coefficient, said coded values being the indexes of quantization levels of said S quantized values, said number S taking into account different possible values of mean energy associate with a block; computes S corresponding values of global error, starting at the first iteration relating to a block from said value of initial global error delivered by said first loading register (SM), said global error values being those obtained by rebuilding the block starting from the total number of coding bits up to that time given to the coefficients of the block itself; and terminates said iterations when said global error is lower than a pre-determined threshold, supplying at the output a first enabling signal (13); uses said number k, delivered by said circuit (EDC) computing the barycenter, to determine at each iteration which of the coefficients of a block is to be coded with an additional bit and supplies the corresponding reading address (7) of said coefficient to said first memory (CB) and to a first delay circuit (D1); calculates the minimum among said S values of global error and supplies at the output (10) the corresponding value of index s (where: $1 \leqslant s \leqslant S$); supplies also at the output (11) at each iteration said total number of bits given to the block;

—second memories (P1, P2 ... PS), one per each value of S, wherein there are memorized the values of the coded coefficients supplied by said coding circuit (QCN) written at each iteration by means of the addressing supplied by said first delay circuit (D1);

—a first multiplexer (MUX1) which receives at its S inputs the corresponding outputs of said second memories and which at each iteration, connects to its output the input identified by said value of index s supplied to its command input;

—a second loading register (OH) able to temporarily store said number k it receives from said circuit (EDC) calculating the barycenter, and said values of index s and of total number of bits given to the block it receives from said coding circuit (QCN);

—an enabling circuit (IC) which supplies its output, upon reception of said first enabling signal (13) from the coding circuit (QCN), with a total information consisting of the contents of said second loading register (OH) followed by the contents of one of said second memories (P1 ... PS) selected by said first multiplexer (MUX1), said total information representing a coded block.

8. Device according to claim 7, characterized in that said coding circuit (QCN) comprises:

—a first register (RE) consisting of S sections, in each of which, at each iteration, the corresponding computed value of global error is written, said S sections being pre-loaded at the beginning of the iterations of a block, with the value of said initial global error delivered by said first loading register (SM);

—a selecting circuit (MES) which at each iteration delivers at an output the minimum among said global error values it receives from said first register (RE), and which also emits said value of index s to another output (10);

—a comparison circuit (DQC) composed of: a first comparator which at each iteration emits a first signal if said global error delivered by said selecting circuit (MES) is lower than or equal to said pre-determined threshold value delivered at one of its inputs (22); a second comparator which at each iteration emits a second signal if said total number of bits given to the block, supplied at its input (11), is greater than or equal to a value stored into a memory cell provided in said comparison circuit; a third comparator which at each iteration emits a third signal if said total bit number given to the block is equal to the maximum value NBmax stored into another memory cell; said comparison circuit emitting said first (13) and a second (25) enabling signal when said third signal or said first and second signals are present, otherwise emitting a pulse at an output (23);

—a counter (NBB), reset to zero at the beginning of the iterations of a block, which, when it receives said pulse from said comparision circuit (DQC), increments by one its counting value representing said total number of bits given to the block, which it supplies at one output (11);

—a circuit apt to generate addresses (AG), comprising K memories each containing, depending on said total bit number given to the block, the index of said coefficient to be coded with an additional bit, the number of bits with which said coefficient is to be coded, and the maximum bit number with which said coefficient is to be coded if the total bit number given to the block were said value NBmax; said maximum bit number determining a subdivision of the coefficients of a block into groups; said circuit for generating addresses, upon reception of said second enabling signal (25), choosing one of said K memories on the basis of the value of said number k, and generating, on the basis of the value of said total bit number given to the block it receives from said counter (NBB), said coefficient address (7) for said first memory (CB), a first address and a first number of levels corresponding to S first quantization laws according to which said coefficient is to be quantized when coded with the preceding bit number, a second address and a second number of levels relating to S second quantization laws with which said coefficient is to be quantized when coded with the present bit number, said first address and number of levels preceding said second address and number of levels, a third enabling signal (29) upon generation of said second address and number of levels;

—a quantizing and error computing circuit (QAE) which, on the basis of said first and second address and number of levels received from said circuit apt to generate addresses (AG), calculates said first and second S quantized values of the transformed coefficient it receives from said first memory (CB); delivers at the output said S coded values of said coefficient to said corresponding second memories (P1 ... PS), computes S corresponding first values of partial errors made in quantizing said coefficient, with respect to the value of the non-quantized coefficient, according to said first S quantization laws; it calculates S second values of partial errors made when using said second S quantization laws; it delivers at the output S differences between said second and first partial errors;

—a first S-section adder (AD), which delivers to said first register (RE), at each iteration, said S global errors, obtained by the addition of said S differences, delivered by said quantizing and error computing circuit (QAE), with the S values of global error obtained at the preceding iteration, present at the outputs of said first register (RE) and delayed by a time equal to an iteration by a second delay circuit (D2).

9. Device according to claim 8, characterized in that said quantizing and error-computing circuit (QAE) comprises:

—S circuits (QF1 ... QFS) for determining the coded value of the coefficients, each circuit containing K memories, each memory containing the values of the end points of the families of quantization laws, each family being in correspondence with one of said coefficient groups; said first and second address delivered by said address generator (AG) identifying in each of said circuits one of said families in which one of said first and respectively second quantization laws is to be chosen; each of said circuits also containing a comparison circuit apt to determine and deliver at the output the values of a first and second level, respectively of said first and second quantization law, in which the value of said coefficient, to be coded with an additional bit supplied by said first memory (CB) falls, the value of said second level being said coded value of said coefficient supplied to the corresponding one of said second memories (P1 ... PS) when said third enabling signal (29) is present;

—S circuits (AF1 ... AFS) for determining the quantized value of the coefficients, each of said circuits containing K memories, the quantized values corresponding to each of the levels of said quantization laws being memorized in each of said memories in corresponding positions; each of said circuits supplying at the output a first and second quantized value identified by addressing the circuit respectively with the sum of said first address and the value of said first level and the sum of said second address and said second level;

—S second adders (S1 ... SS), each of them delivering at the output a first and second difference between said coefficient delayed by a third delay circuit (D3), and respectively said first and second quantized value;

—S circuits (F1 ... FS) for computing an error function which receive from said second adders (S1 ... SS) said first and second differences and deliver at the output respectively said first and second partial error values;

—S third adders (S11 ... S1S) which compute the difference between said second and said first partial error value, the latter being delayed by S fourth delay circuits (D41 ... D4S) and deliver at the outputs, when said third enabling signal is present, said S differences to said first adder (A).

10. Device according to claim 8 or 9, characterized in that the coding circuit (QCN) further comprises a bit assignment circuit (BAT) containing in its internal memory a table for assigning the coding bits delivered to each of the coefficients of the block and which increments by one the number of bits for coding the coefficient identified in said internal table by said coefficient address emitted by said address-generator circuit (AG), said table being delivered at the output when said first enabling signal (13) is present and said table being reset to zero at the beginning of the itertions of a block; and in that said enabling circuit (IC) comprises means for limiting the number of coding bits of each coefficient delivered by said first multiplexer (MUX1), to the corresponding number stored in said table inside the bit assignment circuit (BAT) delivered at one of its inputs.

11. Device according to any of claims 8 to 10, characterized in that a buffer (BL) is also provided for transmitting said total information received from said enabling circuit (IC), said buffer continuously delivering to said coding circuit (QCN) a measurement of its stuffing degree; and that said coding circuit (QCN) comprises a second selecting circuit (TS) which, on the basis of the measurement delivered by said buffer (BL), chooses and delivers a determined value of said pre-determined threshold of global error to said comparison circuit (DQC).

12. Device according to claim 9 or to claim 10 or 11 referred to claim 9, characterized in that said circuits (F, F1 ... FS) for computing an error function compute the square of the magnitude they receive at the input.

**Patentansprüche**

1. Verfahren zur Bildsignalkodierung, bei dem man das Signal in aufeinanderfolgend zu kodierende Blöcke unterteilt und zunächst an jedem der Blöcke eine zweidimensionale Lineartransformation durchführt, wodurch man eine Gruppe transformierter Koeffizienten $C_{ij}$ erhält, und man die Kodierung iterativ durchführt, indem man bei jedem Iterationsschritt einen der Koeffizienten des Blocks mit einem zusätzlichen Bit, das sich auf den vorhergehenden Schritt bezieht, kodiert, wobei die Wahl der Koeffizienten von der Bestimmung der Kodierungsfehler abhängt und man die auf einen Block bezogenen Iterationen mit der Kodierung aller seiner Koeffizienten mit Nullbits beginnt dadurch gekennzeichnet, daß man bei jedem Schritt die Wahl des mit dem zusätzlichen Bit zu kodierenden Koeffizienten durchführt, indem man eine von K Tabellen verwendet, von denen man in jede in Abhängigkeit von der bereits für den Block aufgewandten gesamten Bitzahl den Index des Koeffizienten schreibt, und daß man bei jedem Iterationsschritt einen globalen Fehlerwert auswertet den man während der Rekonstruktion des nämlichen Blocks dadurch erhält, daß man die bis zu diesem Zeitpunkt in Anspruch genommene totale Bitzahl verwendet, und man die auf den Block bezogene Iteration dann endet, wenn der globale Fehlerwert niedriger ist als ein vorgegebener Schwellen-Fehlerwert.

2. Verfahren nach Anspruch 1, dadurch gekennzeichnet, daß man die K Tabellen auf der Basis von K möglichen dem Blockbild zugeordneten Energieverteilungen bestimmt hat; daß man die Blöcke in K körperliche Bereiche unterteilt, und jedem Bereich jeweils eine der K Tabellen eindeutig zuordnet; daß man für jeden Block die Stellung des Baryzentrums berechnet, wobei man das Baryzentrum als Mittelwert der Summe der Werte aller transformierten Koeffizienten berechnet und die Stellung des Baryzentrums unter Verwendung der Koordinatenindizes j, i dieser Koeffizienten bestimmt; und daß man jeden Block mit einer Zahl k ($1 \leq k \leq K$) kennzeichnet, die den Bereich identifiziert, in den das Baryzentrum fällt, wobei die Zahl k für jeden Block die Wahl einer der K Tabellen bestimmt.

3. Verfahren nach Anspruch 2, dadurch gekennzeichnet, daß man die transformierten Koeffizienten eines Blocks in Abhängigkeit von der von jedem der Blöcke geführten mittleren Informationsmenge in Gruppen unterteilt, wobei alle Koeffizienten einer Gruppe mit der selben maximalen Bitzahl kodiert werden; daß man für jede dieser Gruppen eine Familie von Quantisierungsgesetzen dieser Koeffizienten bereitstellt, wobei ein bestimmtes Quantisierungsgesetz einer Familie jeweils der Bitzahl des kodierten Koeffizienten der Gruppe entspricht; und daß man bei jedem Schritt diesen Koeffizienten, der mit einem zusätzlichen Bit zu kodieren ist, quantisiert, wobei der Wert des kodierten Koeffizienten der Quantisierungspegelindex des Koeffizienten bei dessen Kodierung mit dem zusätzlichen Bit ist und die Quantisierung auch einen ersten und einen zweiten quantisierten Wert liefert, von denen sich einer auf die vorhergehende Bitzahl und der andere auf die jetzige Bitzahl, mit denen der Koeffizient kodiert wird, bezieht.

4. Verfahren nach einem der Ansprüche 1 bis 3, dadurch gekennzeichnet, daß man bei jedem Iterationsschritt den globalen Fehler folgendermaßen berechnet:

—man berechnet eine erste und zweite Differenz zwischen dem Wert des transformierten Koeffizienten und dem ersten bzw. zweiten quantisierten Wert;

—man berechnet für jede dieser Differenzen eine Fehlerfunktion und subtrahiert den Funktionswert der ersten Differenz vom Funktionswert der zweiten Differenz, wodurch man einen Teil-Fehlerwert erhält;

—man addiert dann diesen Teil-Fehlerwert mit einem Anfangs-Fehlerwert, der bereits durch die in den vorhergehenden Iterationsschritten berechneten Teil-Fehlerwerte vorgeschrieben worden ist, und erhält so den globalen Fehlerwert, wobei man den Anfangs-Fehlerwert als die Summe der Werte der Fehlerfunktionen nimmt, die man für jeden Koeffizienten bei dessen Kodierung mit Nullbits berechnet hat.

5. Verfahren nach Anspruch 3 oder dem auf Anspruch 3, rückbezogenen Anspruch 4, dadurch gekennzeichnet, daß man für jede der Gruppen K S Familien von Quantisierungsgesetzen bereitstellt, wobei K die Zahl von körperlichen Bereiche ist, in die die Blöcke unterteilt sind, und S eine vorgegebene Zahl von Pegeln ist, in die der Wertebereich der mittleren Energiemenge der Blöcke unterteilt ist; und daß man bei jedem Iterationsschritt in Abhängigkeit von der Zahl k eine Anzahl S der Quantisierungen des Koeffizienten, der mit dem zusätzlichen Bit zu kodieren ist, wählt und parallel durchführt, und zwar eine Quantisierung für jeden der Pegel der mittleren Energiemenge, wobei man S Werte des kodierten Koeffizienten und S erste und zweite quantisierte Werte erhält; und daß man bei jedem Schritt eine Anzahl S der globalen Fehlerwertberechnungen parallel durchkührt, wobei sich jede Berechnung auf eines der S Paare des ersten und zweiten quantisierten Werts bezieht, und man dann danach das Minimum des S globalen Fehlerwerte auswählt und zusätzlich den entsprechenden Wert des kodierten Koeffizienten auswählt.

6. Verfahren nach Anspruch 4 oder nach dem auf Anspruch 4 rückbezogenen Anspruch 5, dadurch gekennzeichnet, daß die Fehlerfunktion der Quadratwert der Differenzen ist.

7. Vorrichtung zur Bildsignalkodierung, bei der das Bildsignal in aufeinanderfolgend zu kodierende Blöcke unterteilt ist und anfänglich an jedem Block eine zweidimensionale lineare Transformation durchgeführt wird, wodurch eine Gruppe transformierter Koeffizienten Cij erhalten wird, gekennzeichnet durch die folgenden Einzelschaltungen:

—eine das Baryzentrum des Absolutwerts der Koeffizienten jedes Blocks berechnende Schaltung (EDC), die eingangsseitig die transformierten Koeffizienten empfängt und unter Verwendung der Indizes i, j dieser Koeffizienten als Koordinaten die Position des Baryzentrums der Absolutwerte des Koeffizienten berechnet aus ausgangsseitig eine Zahl k (wobei $1 \leq k \leq K$) abgibt, die einen von K Bereichen identifiziert, in die jeder Block eingeteilt ist, sowie angibt, wohin die Koordinaten des Baryzentrums fallen;

—eine Schaltung (F), die den Wert einer Funktion eines Anfangs-Teilfehlers für jeden der eingangsseitig von dieser Schaltung empfangenen transformierten Koeffizienten berechnet und ausgangsseitig abgibt;

—ein erstes Laderegister (SM), das zu Beginn jedes Blocks auf Null zurückgestellt wird und ausgangsseitig die Summe der von der Schaltung (F) empfangenen Werte des Anfangs-Teilfehlers, bezogen auf alle Koeffizienten eines Blocks, abgibt, wobei diese Summe ein Anfangs-Globalfehlerwert ist;

einen ersten Speicher (CB), der vorübergehend alle transformierten Koeffizienten eines Blocks speichert und sie ausgangsseitig auf der Grundlage eines an einem seiner Eingänge eingespeisten Adressenwerts abgibt;

—eine Kodierschaltung (QCN), die interativ die Kodierung der transformierten Koeffizienten eines Blocks durchführt, und zwar bei jedem Iterationsschritt folgende Vorgänge ausführt: sie adressiert den ersten Speicher (CB), um eingangsseitig einen der Koeffizienten zu empfangen; sie weist den Koeffizienten ein zusätzliches Kodierungsbit zu, wobei sie beim ersten Iterationsschritt eines Blocks vom Kodieren sämtlicher Koeffizienten mit Nullbits beginnt; sie wählt in Abhängigkeit von einer Gesamtzahl von dem Block bis zu diesem Zeitpunkt gegebenen Kodierungsbits und in Abhängigkeit von der Zahl k die sie von der das Baryzentrum berechnenden Schaltung (EDC) empfängt, S Quantisierungsgesetze, um S quantisierte Werte dieses Koeffizienten zu erhalten; sie gibt ausgangsseitig S entsprechende kodierte Werte des Koeffizienten ab, die die Indizes von Quantisierungspegeln der S quantisierten Werte sind, wobei die Zahl S verschiedene mögliche Werte der mittleren Energie eines Blocks berücksichtigt; sie berechnet S entsprechende Werte des globalen Fehlers, beginnend beim ersten Iterationsschritt eines Blocks von demjenigen Anfangs-Globalfehlerwert, der vom ersten Laderegister (SM) geliefert wird, wobei die Globalfehlerwerte diejenigen sind, die durch Wiederaufbau des Blocks, anfangend von der bis zu dieser Zeit den Koeffizienten des Blocks selbst gegebenen Gesamtzahl der Kodierungsbits, erhalten werden; sie beendet die Iterationsschritte, wenn der Globalfehlerwert niedriger ist als eine vorgegebene Schwelle, wobei sie ausgangsseitig ein erstes Einschaltsignal (13) abgibt; sie verwendet die von der das Baryzentrum berechnenden Schaltung (EDC) gelieferte Zahl k, um bei jedem Schritt zu bestimmen, welcher der Koeffizienten eines Blocks mit einem zusätzlichen Bit zu kodieren ist, und liefert die entsprechende Leseadresse (7) dieses Koeffizienten an den ersten Speicher (CB) und an eine erste Verzögerungsschaltung (D1); sie berechnet das Minimum unter den S Globalfehlerwerten und gibt am Ausgang (10) den entsprechenden Wert des Index s (wobei $1 \leq s \leq S$) ab; und sie liefert außerdem am Ausgang (11) bei jedem Schritt die dem Block gegebene gesamte Bitzahl;

—zweite Speicher (P1, P2, . . ., PS), jeweils einen für jeden Wert von S, in denen die Werte der von der Kodierschaltung (QCN) gelieferten kodierten Koeffizienten gespeichert, und zwar bei jedem Iterationsschritt mit Hilfe der von der ersten Verzögerungsschaltung (D1) gelieferten Adressierung geschrieben werden;

—einen ersten Multiplexer (MUX1), der an seinen S Eingängen die entsprechenden Ausgangssignale der zweiten Speicher empfängt und der bei jedem Iterationsschritt mit seinem Ausgang denjenigen Eingang verbindet, der durch den Wert des an seinen Steuereingang gegebenen Index s identifiziert ist;

—ein zweites Laderegister (OH), das vorrübergehend die Zahl k, die es von der das Baryzentrum berechnenden Schaltung (EDC) empfängt, sowie die Werte des Index s und der Gesamtzahl der dem Block gegebenen Bits, die es von der Kodierschaltung (QCN) empfängt, speichert;

—eine Freigabeschaltung (IC), die ausgangsseitig bei Empfang des ersten Einschaltsignals (13) von der Kodierschaltung (QCN) die aus den Inhalten des zweiten Laderegisters (OH), gefolgt von den Inhalten eines vom ersten Multiplexer (MUX1) ausgewählten Speichers der zweiten Speicher (P1, . . ., PS), bestehende gesamte, einen kodierten Block wiedergebende Information abgibt.

8. Vorrichtung nach Anspruch 7, dadurch gekennzeichnet, daß die Kodierschaltung (QCN) folgende Einzelschaltungen aufweist:

—ein erste Register (RE), das aus S Abschnitten besteht, in denen jeweils bei jedem Iterationsschritt der entsprechende berechnete Globalfehlerwert geschrieben wird, wobei die S Abschnitte zu Beginn der Interationsschritte eines Blocks mit dem globalen Anfangs-Fehlerwert, der vom ersten Laderegister (SM) geliefert wird, vorgeladen wird;

—eine Auswahlschaltung (MES), die bei jedem Iterationsschritt ausgangsseitig das Minimum unter den globalen Fehlerwerten, die sie vom ersten Register (RE) empfängt, abgibt, und die außerdem an einem weiteren Ausgang (10) den Wert des Index s abgibt;

—eine Komparatorschaltung (DQC), die ihrerseits aus folgendes Schaltungen zusammengesetzt ist: einem ersten Komparator, der bei jedem Iterationsschritt ein erstes Signal abgibt, wenn der von der Auswahlschaltung (MES) gelieferte globale Fehlerwert gleich oder niedriger ist als der an einem seiner Eingänge (22) angelegte vorgegebene Schwellenwert; einem zweiten Komparator, der bei jedem Iterationsschritt ein zweites Signal abgibt, wenn die Gesamtzahl der dem Block gegebenen Bits, die an seinen Eingang (11) angelegt sind, gleich oder größer ist als ein in einer in der Komparatorschaltung vorhandenen Speicherzelle gespeicherter Wert; und einem dritten Komparator, der bei jedem Iterationsschritt ein drittes Signal abgibt, wenn die gesamte dem Block gegebene Bitzahl gleich dem in einer anderen Speicherzelle gespeicherten Maximalwert NBmax ist; wobei die Komparatorschaltung das erste (13) und ein zweites (25) Einschaltsignal abgibt, wenn das dritte Signal oder das erste und das zweite Signal vorliegen, und anderenfalls an einem Ausgang (23) einen Impuls abgibt;

—einen Zähler (NBB), der zu Beginn der Iterationsschritte eines Blocks auf Null zurückgestellt wird und der, wenn er den Impuls von der Komparatorschaltung (DQC) empfängt, seinen die Gesamtzahl der dem Block gegebenen Bits wiedergebenden Zählwert, den er an einem Ausgang (11) abgibt, um den Wert 1 erhöht;

—eine adressenerzeugende Schaltung (AG), die K Speicher enthält, von denen jeder in Abhängigkeit von der dem Block gegebenen gesamten Bitzahl den Index des mit dem zusätzlichen Bit zu kodierenden Koeffizienten, die Bitzahl, mit der dieser Koeffizient zu kodieren ist, und die maximale Bitzahl, mit der dieser Koeffizient zu kodieren ist, falls die gesamte dem Block gegebene Bitzahl der Wert NBmax ist, enthält, wobei die maximale Bitzahl eine Unterteilung der Koeffizienten eines Blocks in Gruppen bestimmt; wobei die adressenerzeugende Schaltung bei Empfang des zweiten Einschaltsignals (25) einen der K Speicher aufgrund des Werts der Zahl k auswählt und aufgrund des Werts der gesamten dem Block gegebenen Bitzahl, die sie vom Zähler (NBB) empfängt, die Koeffizientenadresse (7) für den ersten Speicher (CB), eine erste Adresse und eine erste Zahl von Pegeln entsprechend S ersten Quantisierungsgesetzen, nach denen der Koeffizient quantisiert werden soll, wenn er mit der vorhergehenden Bitzahl quantisiert wird, eine zweite Adresse und eine zweite Zahl von Pegeln entsprechend S zweiten Quantisierungsgesetzen, nach denen der Koeffizient quantisiert werden soll, wenn er mit der vorliegenden Bitzahl kodiert wird, die erste Adresse und die erste Anzahl von Pegeln, die der zweiten Adresse und der zweiten Anzahl von Pegeln vorausgeht, und ein drittes Einschaltsignal (29) auf die Erzeugung der zweiten Adresse und Zahl von Pegeln hin erzeugt;

—eine Quantisierungs- und Fehlerberechnungsschaltung (QAE), die auf der Basis der ersten und zweiten Adresse und der Zahl der Pegel, die sie von der adressenerzeugenden Schaltung (AG) empfängt, die ersten und die zweiten S quantisierten Werte des transformierten Koeffizienten, dsn sie vom ersten Speicher (CB) empfängt, berechnet, die weiterhin ausgangsseitig die S kodierten Werte des Koeffizienten zu den entsprechenden zweiten Speichern (P1, . . ., PS) liefert, S entsprechende erste Teil-Fehlerwerte berechnet, die beim Quantisieren des Koeffizienten in Bezug zum Wert des nicht quantisierten Koeffizienten gemäß den ersten S Quantisierungsgesetzen auftreten, und die schließlich S zweite Teilfehlerwerte, die bei Anwendung der zweiten S Quantisierungsgesetze auftreten, berechnet und ausgangsseitig S Differenzwerte zwischen den ersten und den zweiten Teilfehlerwerten abgibt;

—einen ersten S-Abschnitt-Addierer (AD), der bei jedem Iterationsschritt an das erste Register (RE) die S globalen Fehlerwerte abgibt, die durch Addition der S Differenzwerte, welche von der quantisierenden und fehlerberechnenden Schaltung (QAE) geliefert werden, mit den S globalen Fehlerwerten des vorhergehenden Iterationsschritts, die an den Ausgängen des ersten Registers (RE) vorliegen und von einer zweiten Verzögerungsschaltung (D2) um eine Zeit gleich einem Iterationsschritt verzögert sind, erhalten werden.

9. Vorrichtung nach Anspruch 8, dadurch gekennzeichnet, daß die quantisierende und fehlerberechnende Schaltung (QAE) folgende Einzelschaltungen umfaßt:

—S Schaltungen (QF1, . . ., QFS) zum Bestimmen des kodierten Werts der Koeffizienten, wobei jede der Schaltungen K Speicher enthält, von denen jeder die Werte der Endpunkte der Familien von Quantisierungsgesetzen enthält, von denen jede Familie einer der Koeffizientengruppen entspricht, wobei die erste und die zweite vom Adressengenerator (AG) gelieferte Adresse in jeder der Schaltungen eine der Familien, in denen eines der ersten bzw. zweiten Quantisierungsgesetzen auszuwählen ist, identifiziert; und jede der Schaltungen außerdem eine Komparatorschaltung enthält, die die Werte eines ersten Pegels und eines zweiten Pegels des ersten bzw. des zweiten Quantisierungsgesetzes, in die der Wert des vom ersten Speicher (CB) gelieferten, mit dem zusätzlichen Bit zu kodierenden Koeffizienten fällt, bestimmt und ausgangsseitig abgibt und der Wert des zweiten Pegels der kodierte Wert des dem entsprechenden Speicher aus den zweiten Speichern (P1,..., PS) eingegebenen Koeffizienten ist, wenn das dritte Einschaltsignal (29) vorliegt;

—S Schaltungen (AF1,..., AFS) zum Bestimmen des quantisierten Werts der Koeffizienten, von denen jede K Speicher enthält und wobei die quantisierten Werte jedem der Pegel der Quantisierungsgesetze, die in jedem der Speicher in entsprechenden Stellungen gespeichert sind, entsprechen, wobei jede der Schaltungen ausgangsseitig einen ersten und einen zweiten quantisierten Wert abgibt, die durch Adressieren der Schaltung jeweils mit der Summe der ersten Adresse und des Werts des ersten Pegels und der Summe der zweiten Adresse und des zweiten Pegels identifiziert werden;

—S zweite Addierer (S1,.., SS), von denen jede ausgangsseitig einen ersten und einen zweiten Differenzwert zwischen dem von einer dritten Verzögerungsschaltung (D3) verzögerten Koeffizienten und dem ersten bzw. zweiten quantisierten Wert abgibt;

—S Schaltungen (F1,..., FS) zum Berechnen einer Fehlerfunktion, die von den zweiten Addierern (S1,..., SS) die ersten und zweiten Differenzwerte empfangen und ausgangsseitig die ersten bzw. die zweiten Teilfehlerwerte abgeben;

—S dritte Addierer (S11,..., S1S), die den Differenzwert zwischen dem zweiten und dem ersten Teilfehlerwert berechnen, von denen der letztere durch S vierte Verzögerungsschaltungen (D41,..., D4S) verzögert worden ist, und die ausgangsseitig, wenn das dritte Einschaltsignal vorliegt, die S Differenzwerte an den ersten Addierer (AD) liefern.

10. Vorrichtung nach Anspruch 8 oder 9, dadurch gekennzeichnet, daß die Kodierschaltung (QCN) weiterhin eine Bit-Zuordnungsschaltung (BAT) enthält, die in ihrem internen Speicher eine Tabelle zum Zuordnen der an jeden der Koeffizienten des Blocks gelieferten Kodierungsbits enthält und die Zahl der Bits zum Kodieren des in der internen Tabelle durch die von der adressenerzeugenden Schaltung (AG) abgegebene Koeffizientenadresse identifizierten Koeffizienten um die Zahl 1 erhöht, wobei diese Tabelle ausgangsseitig abgegeben wird, wenn das erste Einschaltsignal (13) vorliegt, und die Tabelle zu Beginn der Iterationsschritte eines Blocks auf Null zurückgestellt wird; und daß die Freigabeschaltung (IC) Einrichtungen zum Begrenzen der Zahl der Kodierungsbits jedes der Koeffizienten, die vom ersten Multiplexer (MUX1) geliefert werden, auf die entsprechende in dieser Tabelle innerhalb der Bit-Zuordnungsschaltung (BAT) gespeicherte Zahl, die an einen ihrer Eingänge geliefert wird, umfaßt.

11. Vorrichtung nach einem der Ansprüche 8 bis 10, dadurch gekennzeichnet, daß zum Übersenden der gesamten von der Freigabeschaltung (IC) empfangenen Information ein Puffer (BL) vorhanden ist, der stetig an die Kodierschaltung (QCN) einen Meßwert seines Füllungsgrads liefert; und daß die Kodierschaltung (QCN) eine zweite Auswahlschaltung (TS) enthält, die auf der Grundlage des vom Puffer (BL) gelieferten Meßwerts einen festgelegten Wert der vorbestimmten Schwelle des globalen Fehlers wählt und an die Komparatorschaltung (DQC) liefert.

12. Vorrichtung nach Anspruch 9 oder nach einem der auf Anspruch 9 rückbezogenen Ansprüche 10 oder 11, dadurch gekennzeichnet, daß die Schaltungen (F, F1,..., FS) zum Berechnen einer Fehlerfunktion den Quadratwert der Größe berechnen, die sie eingangsseitig empfangen.

**Revendications**

1. Méthode de codage d'un signal d'image, ledit signal étant subdivisé en blocs à coder en séquence, une transformation bidimensionnelle linéaire étant au préalable appliquée à chacun desdits blocs pour obtenir ainsi un ensemble de coefficients transformés Cij, méthode selon laquelle le codage est effectué itérativement en codant à chaque itération un des coefficients du bloc avec un bit additionnel par rapport à l'itération précédente, le choix du coefficient dependant de la determination des erreurs de codage des coefficients, les itérations concernant un bloc commençant avec le codage de tous des coefficients avec zéro bits, caractérisée en ce qu' à chaque itération le choix du coefficient à coder avec un bit additionnel est effectué en utilisant une table parmi K tables dans chacune desquelles, en fonction du nombre total de bits déjà assignés au bloc, l'indice dudit coefficient est écrit, et en ce qu'on évalue à chaque itération une valeur d'erreur globale, erreur globale qui est l'erreur faite lorsqu'on reconstruit ledit bloc en employant le nombre total de bits qui a été assigné au bloc jusqu'à ce moment, les itérations concernant ce bloc finissant lorsque ladite erreur globale est plus petite qu'une valeur de seuil d'erreur prédéterminée.

2. Méthode suivant la revendication 1, caractérisée en ce que lesdites K tables ont été déterminées sur la base de K distributions possibles d'énergie associées à l'image d'un bloc; en ce que l'on effectue une subdivision des blocs en K régions physiques, en faisant correspondre biuni- voquement a chacune desdites régions une desdites K tables; en ce qu'on calcule pour chaque bloc la position du barycentre considéré comme moyenne de la somme des valeurs de tous les coefficients transformés, ladite position du barycentre étant déterminée en utilisant comme coordonnées les indices i, j desdits coefficients; et en ce que chaque bloc est identifié par un numéro $k$ ($1 \leq k \leq K$) indicatif de la région où ledit barycentre tombe, ledit numéro $k$ déterminant pour chaque bloc le choix d'une desdites K tables.

3. Méthode suivant la revendication 2, caractérisée en ce que les coefficients transformés d'un bloc sont subdivisés en groupes en fonction de la quantité moyenne d'information transportée par chacun d'eux, tous les coefficients d'un groupe étant codés avec la même nombre maximal de bits; en ce que pour chacune desdits groupes on prévoit une famille de lois de quantification desdits coefficients, une loi de quantification déterminée d'une famille étant en correspondance avec le nombre de bits du coefficient codé du groupe; caractérisée en outre en ce que, à chaque itération, on quantifie ledit coefficient à coder avec un bit additionnel, la valeur du coefficient codé étant l'indice du niveau de quantification dudit coefficient lorsqu'il est codé avec un bit additionnel, ladite quantification donnant en outre une première et une seconde valeur quantifiée, respectivement relatives au nombre précédente et actuel de bits de codage dudit coefficient.

4. Méthode suivant l'une quelconque des revendication 1 à 3, caractérisée en ce qu'à chaque itération ladite erreur globale est calculée de la façon suivante:

—on calcule une première et une seconde différence entre la valeur dudit coefficient transformé et, respectivement, lesdites première et seconde valeurs quantifiées;

—on calcule pour chacune desdites différences une fonction d'erreur et on soustrait la valeur de fonction associée à ladite première différence de la valeur associée à ladite second différence, en obtenant ainsi une valeur d'erreur partielle;

—ladite valeur d'erreur partielle est ensuite additionnée à une valeur d'erreur initiale déjà mise à jour avec les erreurs partielles calculées aux itérations précédentes, pour obtenir ainsi ladite erreur globale, ladite erreur initiale étant donnée par la somme des valeurs de ladite fonction d'erreur calculée pour chaque coefficient lorsque chaque coefficient est codé avec zéro bits.

5. Méthode suivant la revendication 3 ou la revendication 4 rattachée à la revendication 3, caractérisée en ce que, pour chacun desdites groupes, on prévoit $K \cdot S$ familles de lois de quantification, où K est ledit nombre de régions physiques en lequel les blocs sont subdivisés, et S est un nombre déterminé de niveaux en lequel on subdivise la plage de valeurs d'énergie moyenne du bloc; et en ce qu'à chaque itération, sur la base dudit numéro $k$, on choisit et on exécute en parallèle un nombre S desdites quantifications dudit coefficients qui doit être codé avec un bit additionnel, une pour chaque niveau d'énergie moyenne, en obtenant ainsi S valeurs de coefficient codé et S première et seconde valeurs quantifiées; caractérisée en outre en ce qu'à chaque itération on exécute en parallèle un nombre S desdits calculs d'erreur globale, chacun relatif à une des S paires desdites première et seconde valeurs quantifiées, en choisissant ensuite la valeur minimale parmi lesdites S valeurs d'erreur globale et en choisissant en outre la valeur correspondante de coefficient codé.

6. Méthode suivant la revendication 4 ou la revendication 5 rattachée à la revendication 4, caractérisée en ce que ladite fonction d'erreur est le carré desdites différences.

7. Dispositif de codage d'un signal d'image, ledit signal étant subdivisé en blocs à coder en séquence, a chacun desdits blocs étant au préalable appliquée une transformation linéaire bidimensionnelle, pour obtenir ainsi un ensemble de coefficients transformés Cij, caractérisé en ce qu'il comprend:

—un circuit (EDC) de calcul du barycentre des valeurs absolues des coefficients de chaque bloc, qui reçoit en entrée lesdits coefficients transformés et qui, en utilisant les indices i, j desdits coefficients comme des coordonnées, calcule la position du barycentre des valeurs absolues des coefficients, en fournissant à sa sortie un numéro $k$ ($1 \leq k \leq K$) indicatif d'une des K régions en lesquelles chaque bloc est subdivisé, et où les coordonnées dudit barycentre tombent;

—un circuit (F) qui calcule et fournit à sa sortie la valeur d'une fonction d'erreur partielle initiale relative à chacun des coefficients transformés qu'il reçoit à son entrée;

—un premier registre accumulateur (SM), remis à zéro au début de chaque bloc, qui fournit à sa sortie la somme desdites valeurs d'erreur partielle initiale reçues dudit circuit (F), relatives à tous les coefficients d'un bloc, ladite somme étant une valeur d'erreur globale initiale;

—un première mémoire (CB), apte à mémoriser temporairement tous les coefficients transformés relatifs à un bloc et à les fournir à sa sortie sur la base d'une valeur d'adresse fournie à une de ses entrées;

—un circuit de codage (QCN), qui effectue de manière itérative le codage des coefficients transformés d'un bloc et qui, à chaque itération: adresse ladite première mémoire (CB) pour recevoir à l'entrée un desdits coefficients; assigne un bit additionnel de codage audit coefficient, en commençant, à la première itération d'un bloc, par un codage de tous les coefficients avec zéro bits; sur la base d'un nombre total de bits de codage fournis jusqu'à ce moment au bloc et sur la base dudit numéro $k$ qu'il reçoit dudit circuit de calcul du barycentre (EDC), choisit S lois de quantification pour obtenir S valeurs quantifiées dudit coefficient; fournit à sa sortie S valeurs codées correspondantes dudit coefficient, lesdites valeurs codifiées étant les indices des niveaux de quantification desdites S valeurs quantifiées, ledit numéro S tenant en compte différentes valeurs possibles d'énergie moyenne associées au bloc; calcule S valeurs d'erreur globale, en commençant, à la première itération d'un bloc, par ladite valeur d'erreur initiale globale fournie par ledit premier registre accumulateur (SM), lesdites valeurs d'erreur globale étant les valeurs obtenues en reconstruisant le bloc à partir du nombre total des bits de codage fournis jusqu'à ce moment aux coefficients du bloc lui-même; termine lesdites itérations lorsque l'erreur globale est plus petite qu'un seuil prédéterminé, en fournissant à sa sortie un premier signal de validation (13); emploie ledit numéro $k$, fourni par ledit circuit (EDC) de calcul du barycentre, pour choisir à chaque itération le coefficient du bloc à coder avec un bit additionnel et fournit l'adresse (7) de lecture dudit coefficient à ladite première mémoire (CB) et à un premier circuit de retard (D1); calcule le minimum parmi lesdites S valeurs d'erreur globale et fournit à sa sortie (10) la valeur correspondante d'indice $s$ ($1 \leqslant s \leqslant S$); fournit de même à sa sortie (11), à chaque itération, ledit nombre total de bits données au bloc;

—des secondes mémoires (P1, P2, . . ., PS), un pour chaque valeur de $s$, où on mémorise les valeurs des coefficients codés fournies par ledit circuit de codage (QCN) et écrites à chaque itération au moyen de l'adressage fourni par ledit premier circuit de retard (D1);

—un premier multiplexeur (MUX1), qui reçoit à ses S entrées les sorties correspondantes desdites secondes mémoires et qui, à chaque itération, connecte à sa sortie l'entrée identifiée par ladite valeur d'indice $s$ fournie à son entrée de commande;

—un second registre accumulateur (OH), qui mémorise temporairement ledit numéro $k$, qu'il reçoit dudit circuit (EDC) de calcul du barycentre, et lesdites valeurs d'indice $s$ et du nombre total de bits données au bloc, qu'il reçoit dudit circuit de codage (QCN);

—un circuit de validation (IC) qui, lorsqu'il reçoit ledit premier signal de validation (13) du circuit de codage (QCN), fournit une information globale constituée par le contenu dudit second registre accumulateur (OH) suivi par le contenu d'une desdites secondes mémoires (P1 . . . PS) sélectionnée par ledit premier multiplexeur (MUX1), ladite information globale étant représentative d'un bloc codé.

8. Dispositif selon la revendication 7, caractérisé en ce que ledit circuit de codage (QCN) comprende:

—un premier registre (RE) composé de S sections dans chacune desquelles on écrit, à chaque itération, la valeur calculée correspondante d'erreur globale, lesdites S sections étant préalablement chargées, à la première itération d'un bloc, à la valeur de ladite erreur globale initiale fournie par ledit premier registre accumulateur (SM);

—un circuit de sélection (MES) qui à chaque itération fournit à une sortie le minimum parmi lesdites erreurs globales qu'il reçoit dudit premier registre (RE), et qui émet aussi ladite valeur d'indice $s$ à une autre sortie (10);

—un circuit de comparaison (DQC) constitué par: un premier comparateur qui, à chaque itération, émet un premier signal si ladite erreur globale fournie par ledit circuit de sélection (MES) est plus petit que ou égale à ladite valeur de seuil prédéterminée fournie à une de ses entrées (22); un deuxième comparateur fournie à chaque itération, émet un deuxième signal si ledit nombre total de bits donnés au bloc, fourni à son entrée (11), est plus élevée que ou égal à une valeur stockée dans une cellule de mémoire prévue dans ledit circuit de comparaison; un troisième comparateur qui, à chaque itération, émet un troisième signal si ledit nombre total de bits donnés au bloc est égal à la valeur maximale NBmax stockée dans une autre cellule de mémoire; ledit circuit de comparaison émettant ledit premier (13) et un second (25) signal de validation lorsque ledit troisième signal ou lesdits premier et second signaux sont présents, et, dans le cas contraire, émettant une impulsion à une sortie (23);

—un compteur (NBB), qui est rémis à zéro au début des itérations d'un bloc et qui, lorsqu'il reçoit ladite impulsion dudit circuit de comparaison (DQC), augmente d'une unité sa valeur de comptage, qui représente ledit nombre total de bits fournis au bloc et qui est fournie à une sortie (11);

—un circuit générateur d'adresses (AG), qui comprend K mémoires dont chacune contient, en fonction dudit nombre total de bits fournis au bloc, l'indice dudit coefficient à coder avec un bit additionnel, le nombre de bits par lequel le coefficient est à coder et le nombre maximal des bits par lequel ledit coefficient est à coder si le nombre total de bits fournis au bloc était ladite valeur NBmax; ledit nombre maximal de bits déterminant une subdivision des coefficients d'un bloc en groupes; ledit circuit générateur d'adresses, à la réception dudit second signal de validation (25), choisissant une desdites K mémoires en fonction de la valeur dudit numéro $k$, et engrendrant, sur la base de la valeur dudit nombre total de bits données au bloc, qu'il reçoit dudit compteur (NBB), ladite adresse de coefficient (7) pour ladite première mémoire (CB), une première adresse et un premier nombre de niveaux qui correspondent à S premières lois de quantification selon lesquelles ledit coefficient est à quantifier lorsqu'il est codé avec le nombre précédent de bits, une seconde adresse et un second nombre de niveaux relatifs à S secondes lois de quantification avec lesquelles ledit coefficient doit être quantifié lorsqu'il est codé avec le nombre présent de bits, ladite première adresse et ledit premier nombre de niveaux précédant ladite seconde adresse et ledit second nombre de niveaux, et un troisième signal de validation (29) lors de la génération de ladite seconde adresse et dudit second nombre de niveaux;

—un circuit de quantification et de calcul d'erreur (QAE) qui, sur la base desdites premières et secondes adresses et nombres des niveaux reçus dudit circuit générateur d'adresses (AG), calcule lesdites S premières et secondes valeurs quantifiées du coefficient transformé qu'il reçoit de ladite première mémoire (CB); fournit à sa sortie lesdites S valeurs codées dudit coefficient aux secondes mémoires correspondantes (P1...PS); calcule S premières valeurs correspondantes d'erreurs partielles faites en quantifiant ledit coefficient, par rapport à la valeur du coefficient non quantifié, suivant les premières S lois de quantification; calcule S secondes valeurs d'erreurs partielles faites lorsqu'on emploie lesdites S secondes lois de quantification; fournit à la sortie S différences entre lesdites secondes et premières erreurs partielles;

—un premier additionneur (AD) à S sections, qui fournit audit premier registre (RE), à chaque itération, lesdites S erreurs globales, obtenues par l'addition desdites S différences, fournies par ledit circuit de quantification et de calcul d'erreur (QAE), avec les S valeurs d'erreur globale obtenues à l'itération précédente, présentes aux sorties dudit premier registre (RE) et retardées d'un temps égal à une itération par un deuxième circuit de retard (D2).

9. Dispositif suivant la revendication 8, caractérisé en ce que ledit circuit de quantification et de calcul d'erreur (QAE) comprend:

—S circuits (QF1...QFS) pour déterminer la valeur codée des coefficients, chaque circuit contenant K mémoires, chaque mémoire contenant les valeurs des points de fin des familles de lois de quantification, chaque famille étant relative à un desdits groupes de coefficients; lesdites première et seconde adresses fournies par ledit générateur d'adresses (AG) identifiant dans chacun desdits circuits une desdites familles dans laquelle une desdites premières et respectivement secondes lois de quantification est à choisir; chacun desdits circuits contenant aussi un circuit de comparaison apte à déterminer et fournir à sa sortie les valeurs d'un premier et second niveau, respectivement, de ladite première et seconde loi de quantification, dans lesquelles tombe la valeur dudit coefficient à coder avec un bit additionnel, fournie par ladite première mémoire (CB), la valeur dudit second niveau étant ladite valeur codée dudit coefficient fournie à la mémoire correspondante parmi lesdites secondes mémoires (P1...PS) lorsque le troisième signal de validation (29) est présent;

—S circuits (AF1...AFS) pour déterminer la valeur quantifiée des coefficients, chacun desdits circuits contenant K mémoires, les valeurs quantifiées correspondant à chacun des niveaux desdites lois de quantification étant mémorisées dans chacune desdites mémoires en des positions correspondantes; chacun desdits circuits fournissant à sa sortie une première et une seconde valeur quantifiée, identifiées en adressant le circuit respectivement avec la somme de ladite première adresse et de la valeur dudit premier niveau, et avec la somme de ladite seconde adresse et dudit second niveau;

—S deuxièmes additionneurs (S1...SS), dont chacun fournit à la sortie une première et une seconde différence entre ledit coefficient retardé par un troisième circuit de retard (D3) et, respectivement, la première et seconde valeur quantifiée;

—S circuits (F1...FS) pour calculer une fonction d'erreur, qui reçoivent desdits deuxièmes additionneurs (S1...SS) lesdites premières et secondes différences et qui fournissent à leur sortie respectivement lesdites première et seconde valeurs d'erreur partielle;

—S troisièmes additionneurs (S11...S1S) qui calculent la différence entre lesdites secondes et premières valeurs d'erreur partielle, ces dernières étant retardées par S quatrièmes circuits de retard (D41...D4S), et qui, lorsque ledit troisième signal de validation est présent, fournissent lesdites S différences audit premier additionneur (AD).

10. Dispositif suivant la revendication 8 ou 9, caractérisé en ce que ledit circuit de codage (QCN) comprend en outre un circuit d'assignation de bits (BAT) qui contient dans sa mémoire interne une table d'assignation des bits de codage fournis à chacun des coefficients du bloc, et qui augmente de 1 le nombre de bits de codage du coefficient identifié dans ladite table interne par ladite adresse de coefficient émise par ledit circuit générateur d'adresses (AG), ladite table étant fournie à la sortie lorsque le premier signal de validation (13) est présent, et étant remise à zéro au début des itérations d'un bloc; et en ce que ledit circuit de validation (IC) comprend des moyens qui limitent le nombre de bits de codage de chacun des coefficients fournis par ledit premier multiplexeur (MUX1) au nombre correspondant mémorisé dans ladite table interne du circuit d'assignation de bits (BAT) et fourni à une de ses entrées.

11. Dispositif suivant l'une quelconque des revendications 8 à 10, caractérisé en ce qu'il comprend en outre une mémoire tampon (BL) pour la transmission de ladite information globale reçue dudit circuit de validation (IC), ladite mémoire tampon fournissant continuellement audit circuit de codage (QCN) une mesure de son degré de remplissage; et en ce que ledit circuit de codage (QCN) comprend un second circuit de sélection (TS) qui, sur la base de ladite mesure fournie par ladite mémoire tampon (BL), choisit et fournit audit circuit de comparaison (DQC) une valeur déterminée dudit seuil predéterminé d'erreur globale.

12. Dispositif selon la revendication 9, où la revendication 10 ou 11, rattachées à la revendication 9, caractérisé en ce que lesdites circuits (F, F1...FS) de calcul d'une fonction d'erreur calculent le carré de la valeur qu'ils reçoivent à l'entrée.

0 100 916

FIG.1

FIG. 2

QCN

0 100 916

2

FIG. 3

QAE